# FASCICULE DE BREVET EUROPEEN

(11) **EP 2 708 167 B1**
(45) Date de publication et mention de la délivrance du brevet: **18.04.2018**
(21) Numéro de dépôt: 13182868.3
(22) Date de dépôt: 03.09.2013
(51) Int. Cl.: A47J 43/046, A47J 43/07

(54) **Appareil ménager pour émulsionner ou mélanger une préparation alimentaire fluide dont l'outil possède un axe de rotation incliné**
Haushaltsgerät zum Emulgieren oder Mischen einer flüssigen Nahrungsmittelzubereitung, bei dem das Mischwerkzeug eine geneigte Rotationsachse besitzt
Kitchen appliance for emulsifying or mixing a fluid food preparation, the tool of which has an inclined axis of rotation

(30) Priorité: 17.09.2012 FR 1258708
(43) Date de publication de la demande: 19.03.2014
(73) Titulaire: SEB S.A., 69130 Ecully (FR)
(72) Inventeur: Hiron, Frédéric, 72130 Saint Ouen De Mimbre (FR); Deliens, Patrick, 53100 Mayenne (FR)
(74) Mandataire: Bourrières, Patrice

(56) Documents cités:
- EP-A1- 1 922 960
- EP-A1- 2 229 853
- EP-A2- 0 131 548
- CN-A- 102 144 899
- DE-A1- 19 645 312
- US-A- 2 774 576
- US-A1- 2008 031 087

## Description

La présente invention concerne le domaine technique des appareils ménagers utilisés pour émulsionner ou mélanger des préparations alimentaires fluides tels que, par exemple mais non exclusivement, les appareils ménagers utilisés pour émulsionner des boissons chaudes ou froides à base de lait appelés «mousseurs» à lait.

Une demande de brevet EP131548 a proposé un appareil ménager pour émulsionner ou mélanger une préparation alimentaire fluide comprenant un récipient muni d'un fond et qui comprend, à proximité du fond du récipient, une cheminée qui s'étend vers le haut à partir du fond. L'appareil ménager comporte également un châssis supportant le récipient et comprenant un moteur électrique associé à des moyens d'entrainement en rotation. Selon ce document l'appareil est équipé d'un outil pour émulsionner ou mélanger la préparation alimentaire, qui est rotatif autour d'un axe Δ incliné d'un angle α par rapport à la verticale. L'outil comprend un organe d'accouplement avec les moyens d'entrainement qui est engagé dans la cheminée. L'outil comprend aussi une jupe creuse qui est cylindrique de révolution d'axe Δ et qui s'étend à partir des moyens d'accouplement vers le bas à l'extérieur de la cheminée. La jupe porte en outre à l'opposé des moyens d'accouplement au moins un organe de travail.

Un tel appareil ménager permet effectivement de réaliser diverses préparations alimentaires mais possède l'inconvénient de présenter des risques de fuite par la cheminée lorsque la préparation alimentaire est liquide et se trouve entrainée dans la jupe vers le haut de la cheminée sous l'effet des forces centrifuges.

Il est donc apparu le besoin d'un appareil ménager pour émulsionner ou mélanger une préparation alimentaire fluide qui ne présente pas de tels risques de fuites. Un autre appareil ménagé est décrit dans le document EP0131548 A2. Afin d'atteindre cet objectif l'invention concerne un appareil ménager pour émulsionner ou mélanger une préparation alimentaire fluide tel que décrit dans la revendication 1 comprenant :
un récipient muni d'un fond et qui comprend, à proximité du fond du récipient, une cheminée qui s'étend vers le haut à partir du fond jusqu'à une extrémité supérieure,
un châssis supportant le récipient et comprenant un moteur électrique associé à des moyens d'entrainement en rotation,
un outil, pour émulsionner ou mélanger la préparation alimentaire qui est rotatif autour d'un axe Δ incliné d'un angle α par rapport à la verticale, qui comprend un organe d'accouplement avec les moyens d'entrainement et une jupe creuse d'axe Δ s'étendant à partir des moyens d'accouplement vers le bas et portant à l'opposé des moyens d'accouplement au moins un organe de travail.

Selon l'invention, la jupe creuse comporte des moyens de blocage et/ou des moyens d'évacuation de la préparation alimentaire situés entre la jupe creuse et la cheminée pour empêcher ladite préparation alimentaire d'atteindre l'extrémité supérieure.

Selon l'invention, la jupe creuse d'axe Δ s'évase vers le bas et les moyens de blocages sont constitués par une surface intérieure de la jupe présente une forme tronconique dont les génératrices forment avec l'axe Δ un angle β supérieur ou égal à l'angle α. Une telle conformation de la jupe creuse évite que les liquides ne remontent à l'intérieur de la jupe creuse sous l'effet des forces centrifuges.

Selon une caractéristique de l'invention, la jupe creuse comprend au moins un canal radial traversant. Un tel canal permet d'évacuer sous l'effet de la force centrifuge toute préparation alimentaire qui serait éventuellement à l'intérieur de la jupe.

Selon une autre forme de réalisation de l'invention, les moyens d'évacuation sont constitués par au moins un canal radial traversant la jupe creuse et agencé sous l'extrémité supérieure.

Selon une variante de cette forme de réalisation, la jupe creuse comprend une série de canaux radiaux traversant répartis à autour de la jupe.

Selon une caractéristique de l'invention, l'organe d'accouplement comprend un arbre d'entrainement dont une extrémité est solidaire de la jupe creuse et dont l'extrémité opposée comprend une conformation d'accouplement destinée à coopérer avec les moyens d'entrainement et la cheminée est destinée à recevoir l'arbre d'entrainement.

Selon une caractéristique de l'invention le fond du récipient est sensiblement normal à l'axe Δ. Cette caractéristique permet d'optimiser l'efficacité de l'outil rotatif.

Selon une autre caractéristique de l'invention, le fond du récipient est incliné lorsque le châssis de l'appareil repose sur une surface sensiblement horizontale.

Selon l'invention l'organe de travail peut être réalisé de toute manière appropriée et par exemple comprendre une ou plusieurs pales ou lames. Selon une forme de réalisation de l'invention, l'organe de travail est un enroulement hélicoïdal à spires non jointives qui s'étend à la périphérie de la base de la jupe creuse. Un tel mode de réalisation est particulièrement adapté pour le moussage du lait.

Selon une caractéristique de l'invention, le récipient est amovible.

Selon une caractéristique de l'invention visant à permettre la réalisation de préparations alimentaires chaudes ou cuites, l'appareil ménager comprend des moyens de chauffage du récipient.

Selon une variante de cette caractéristique, les moyens de chauffage comprennent une résistance électrique intégrée dans le fond du récipient. Selon une autre caractéristique de l'invention visant à éviter les projections lors du fonctionnement de l'outil rotatif, le récipient est équipé d'un couvercle amovible. Selon l'invention, la cheminée comporte une paroi externe et la jupe creuse présente une paroi interne, la paroi externe de la cheminée étant non parallèle à la paroi interne de la jupe creuse.

Cette disposition permet d'éviter un effet de ventouse entre la cheminée et la jupe.

De préférence, la cheminée est cylindrique de révolution d'axe Δ en étant ouverte au niveau de son extrémité supérieure.

Avantageusement, le récipient comprend un robinet de distribution R situé à proximité de son fond permettant un soutirage du contenu du récipient.

Bien entendu, les différentes caractéristiques, variantes et formes de mise en oeuvre du procédé selon l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent des formes non limitatives de réalisation d'un appareil ménager, conforme à l'invention, pour émulsionner ou mélanger des préparations alimentaires fluides.
La figure 1 est une vue d'ensemble d'un appareil ménager, conforme à l'invention, pour émulsionner ou mélanger des préparations alimentaires fluides.
La figure 2 est une coupe axiale d'un récipient amovible de l'appareil ménager illustré à la figure 1.
La figure 3 est une coupe axiale d'un outil rotatif de l'appareil ménager illustré à la figure 1.
La figure 4 est une coupe axiale montrant une variante de réalisation d'un couvercle et d'un outil rotatif d'un appareil ménager, conforme à l'invention, pour émulsionner ou mélanger des préparations alimentaires fluides Il est à noter que sur ces figures les éléments structurels et/ou fonctionnels communs aux différentes variantes peuvent présenter les mêmes références.

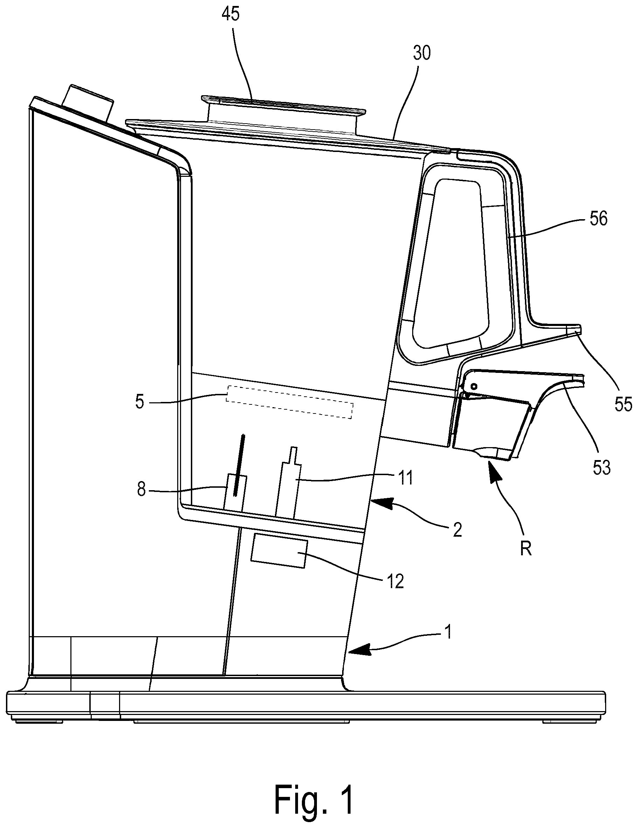

Un appareil ménager, selon l'invention, pour émulsionner ou mélanger une préparation alimentaire fluide comprend, comme le montre la figure 1, un châssis 1 supportant un récipient 2 qui, selon l'exemple illustré, est amovible ou démontable. Bien entendu, le récipient 2 pourrait également être intégré ou fixé de manière permanente au châssis 1.

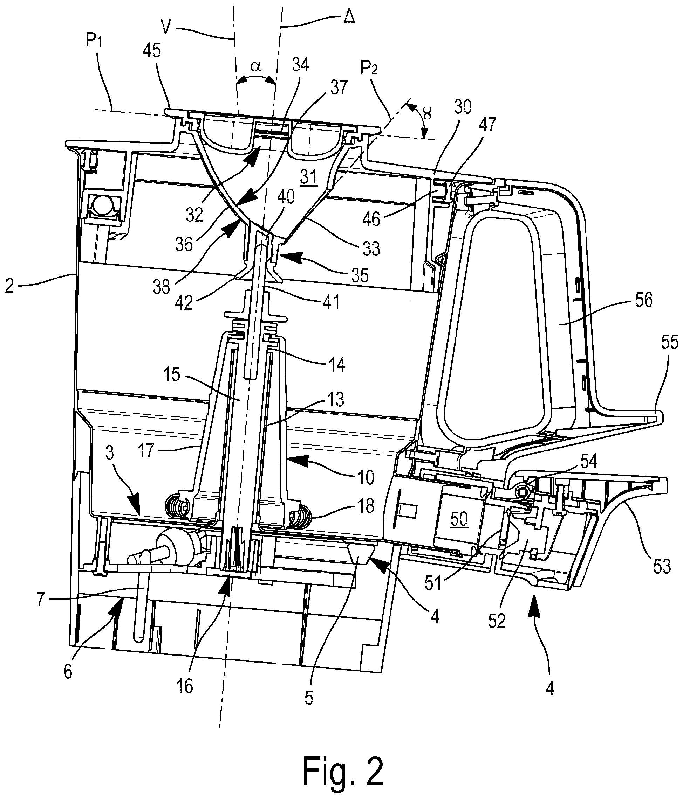

Le récipient 2 est muni d'un fond 3, visible à la figure 2, qui est associé à des moyens de chauffage 4 qui comprennent une résistance électrique 5 placée sous le fond 3 au contact de ce dernier de manière à permettre un chauffage par conduction des aliments contenus par le récipient sans être en contact direct avec ceux-ci. Afin d'assurer l'efficacité du chauffage, le fond 3 est de préférence réalisé en un matériau thermiquement conducteur tel que par exemple de l'acier inoxydable. Selon l'exemple illustré, la résistance électrique 5 est équipée d'un connecteur 6 comprenant deux fiches mâles 7 destinées à venir s'insérer dans deux fiches femelles 8 complémentaires qui équipent le châssis 1 et qui permettent un retrait aisé du récipient 2. Il est à noter qu'une seule fiche mâle 7 et une seule fiche femelle 8 sont visibles aux figures 1 et 2. Bien entendu, les moyens de chauffage 4 du contenu du récipient 2 pourraient être réalisés de toute autre manière appropriée et comprendre, par exemple, une source de micro-ondes, une source de rayons infrarouges ou encore un système d'induction électromagnétique induisant à un chauffage du fond réalisé en partie au moins en un matériau ferromagnétique.

Le récipient 2 comprend également un robinet de distribution R situé à proximité de son fond 3 et permettant un soutirage du contenu du récipient comme cela apparaîtra par la suite. Il est à noter que le robinet de distribution R est de préférence amovible de manière à en faciliter le nettoyage.

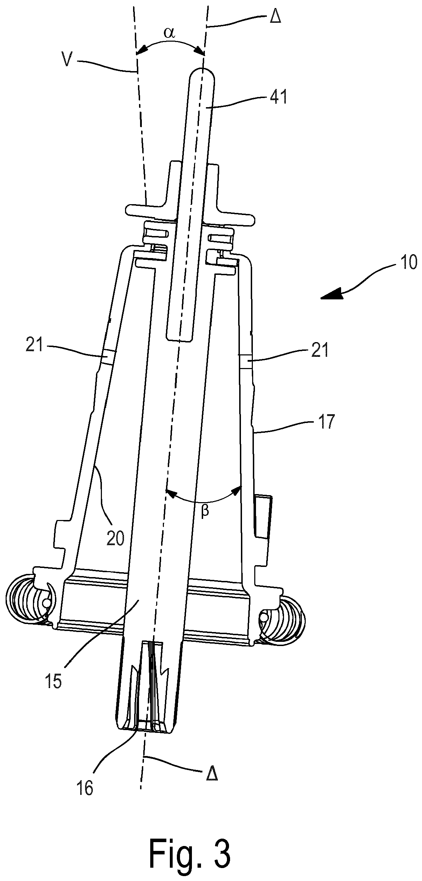

Afin de permettre le mélange ou l'émulsion des aliments qu'il contient, le récipient 2 comprend, à proximité de son fond 3, un outil rotatif 10 qui est mobile en rotation autour d'un axe Δ. L'outil rotatif 10 est représenté seul à la figure 3. Selon l'exemple illustré, l'entraînement en rotation de l'outil rotatif 10 est effectué de manière directe par accouplement mécanique dudit outil rotatif 10 avec des moyens d'entraînement 11 en rotation solidaires du châssis 1. Les moyens d'entraînement 11 en rotation sont alors associés à un moteur électrique 12 porté par le châssis 1. Le raccordement de l'outil rotatif 10 aux moyens d'entraînement 11 s'effectue au travers d'une cheminée 13 qui est cylindrique de révolution d'axe Δ et qui s'étend, à partir du fond 3 du récipient 2, vers le haut en étant ouverte au niveau de son extrémité supérieure 14. La partie inférieure de la cheminée 13 se trouve alors en regard des moyens d'entraînement 11. Dans la mesure où l'extrémité supérieure 14 de la cheminée est située à distance du fond 3 du récipient 2, il est possible de remplir ce dernier, sans risque de débordement, jusqu'à un niveau situé en dessous de celui de l'extrémité supérieure 14.

L'outil rotatif 10 comprend alors un organe d'accouplement 15 destiné à s'étendre à l'intérieur de la cheminée 13 et à coopérer avec les moyens d'entraînement 11. L'organe d'accouplement se présente, selon l'exemple illustré, sous la forme d'un arbre d'entrainement 15 cylindrique de révolution d'axe Δ qui possède une longueur supérieure à celle de la cheminée 13 et qui présente un diamètre extérieur inférieur au diamètre intérieur de la cheminée 13. L'arbre d'entrainement 15 possède en outre, au niveau de son extrémité inférieure, une conformation d'accouplement 16 destinée à coopérer avec les moyens d'entraînement 11.

L'organe d'accouplement 15 porte, au niveau de son extrémité supérieure opposée à son extrémité inférieure, une jupe creuse 17 d'axe Δ qui s'étend vers le bas de manière à être située à l'extérieur de la cheminée 13 lorsque que l'organe accouplement 15 s'y trouve disposé. La jupe creuse 17 porte, à l'opposé de sa zone de liaison avec l'organe d'accouplement 15, au moins un organe de travail 18 formé, selon l'exemple illustré, par un enroulement hélicoïdal à spires non jointives d'un fil d'acier inoxydable disposé selon un tore d'axe Δ qui s'étend à la périphérie de la base de la jupe creuse 17. La hauteur de la jupe creuse 17 est alors adaptée pour que l'organe de travail se trouve à proximité immédiate du fond du récipient 2 sans toutefois frotter sur ce dernier. Selon l'exemple illustré, l'axe de rotation Δ de l'outil rotatif est incliné d'un angle α par rapport à la verticale V. Afin d'éviter que, lors de la rotation de l'outil rotatif 10, les liquides alimentaires contenus dans le récipient ne remontent sous l'effet de la force centrifuge le long de la paroi intérieure de la jupe creuse 17 jusqu'à atteindre l'extrémité supérieure 14 de la cheminée, la jupe creuse 17 s'évase vers le bas et comprend, en tant que moyens de blocage de la préparation alimentaire, une surface intérieure 20 qui présente une forme tronconique dont les génératrices forment, avec l'axe Δ, un angle β supérieur ou égal à l'angle α. Dans le même sens et afin d'éviter les risques d'écoulement de liquides alimentaires par la cheminée 13 lors de la rotation de l'outil rotatif 10, cette disposition de l'invention est de préférence, mais non nécessairement, complétée par la mise en oeuvre d'au moins un et de préférences plusieurs canaux radiaux 21 traversant la jupe creuse 17 de sorte que les liquides alimentaires susceptibles de se trouver sur la surface intérieure de la jupe creuse 17 se trouvent éjectés vers l'extérieur sous l'effet de la force centrifuge lors de la rotation de l'outil rotatif 10.

Par ailleurs, selon l'exemple illustré, afin de permettre un écoulement complet des liquides alimentaires contenus dans le récipient 2, le fond 3 est incliné vers le robinet R lorsque le châssis de l'appareil repose sur une surface sensiblement horizontale. De manière à assurer une efficacité optimale à l'outil rotatif 10, le fond 3 du récipient est alors de préférence sensiblement normal à l'axe Δ de rotation de l'outil rotatif 10 de sorte que l'organe de travail tourne dans un plan sensiblement parallèle au fond du récipient 2.

Afin d'éviter les projections de préparations alimentaires hors du récipient lors de la rotation de l'outil rotatif 10, l'appareil ménager comprend, comme le montre la figure 2, un couvercle 30 disposé sur la partie supérieure du récipient 2 de manière à l'obturer en partie au moins. Le couvercle 30 est de préférence amovible de manière à permettre un nettoyage aisé de l'intérieur du récipient 2 ainsi qu'un retrait de l'outil rotatif 10.

Le couvercle 30 comprend une trémie 31 d'introduction d'ingrédients dans le récipient 2. Une telle trémie 31 permet de verser des liquides alimentaires ainsi que d'introduire des ingrédients dans le récipient alors que l'outil rotatif 10 tourne sans risques de projection à l'extérieur du récipient. La trémie comprend une ouverture d'introduction 32 située sur le ou au-dessus du couvercle 30. Selon l'exemple illustré, l'ouverture d'introduction 32 se trouve sensiblement au-dessus de la face supérieure du couvercle 30. La trémie d'introduction 32 comprend également un orifice de sortie 33 qui est situé en dessous du couvercle 30 et débouche à l'intérieur du récipient 2. Dans le cas présent, l'ouverture d'introduction 32 est fermée par un bouchon amovible 34. De manière à limiter les risque de projections induites par le fonctionnement de l'outil rotatif 10, le plan P1 de la section d'entrée de l'ouverture d'introduction 32 et le plan P2 de la section de sortie de l'orifice de sortie 33 forme un angle γ compris entre 70° et 90°. De plus, afin d'éviter l'introduction d'ingrédients de trop grande taille, l'orifice de sortie 33 possède une section de sortie inférieure ou égale à 6 cm².

Afin de garantir un fonctionnement aussi silencieux que possible à l'appareil ménager en assurant un guidage en rotation de l'outil rotatif 10 optimal, la trémie d'introduction 31 comprend des moyens de guidage 35 en rotation de l'outil rotatif 10.

Selon l'exemple illustré, la trémie d'introduction 31 comprend, à l'opposé de l'ouverture d'introduction 32, une paroi de fond 36 dont la face 37 orientée vers l'ouverture d'introduction 32 est concave et dont la face 38 orientée vers l'intérieur du récipient 2 porte les moyens de guidage 35 en rotation de l'outil rotatif 10.

Les moyens de guidage 35 en rotation de l'outil rotatif 10 peuvent être réalisés de différentes manières. Dans le cas présent, les moyens de guidage 35 comprennent un alésage 40 de réception d'un doigt de guidage 41 porté par l'outil rotatif 10. Afin de faciliter l'engagement du doigt de guidage 41 dans l'alésage 40, ce dernier comprend une ouverture évasée définie par un rebord tronconique 42 convergeant vers l'intérieur de l'alésage 40.

Comme cela a été indiqué précédemment, le couvercle 30 est amovible. Afin de faciliter sa prise en main, l'ouverture d'introduction 32 est centrée par rapport à la face supérieure du couvercle et comprend une collerette périphérique 45 qui se trouve également centrée par rapport au couvercle et qui forme des moyens de préhension. De plus, le couvercle 30 comprend un rebord périphérique 46 qui s'étend vers l'intérieur du récipient et qui porte un joint d'étanchéité 47 destiné à coopérer avec une partie supérieure du bord périphérique du récipient 2. Le joint d'étanchéité 47 assure le maintien du couvercle 30 par son frottement contre le bord périphérique du récipient 2.

Lorsque la préparation alimentaire exécutée au moyen de l'appareil ménager selon l'invention est prête, le robinet de distribution R est utilisé afin de permettre un soutirage de la préparation alimentaire.

À cet effet, le robinet de distribution R comprend un canal de distribution 50 qui débouche à l'intérieur du récipient 2 et dont une bouche 51 située à l'opposé du récipient 2 est obturée par une vanne d'ouverture 52 reliée à un levier de manoeuvre 53. La vanne d'ouverture 52 est asservie en fermeture par le levier de manoeuvre 53 qui est soumis à l'action d'un ressort 54 qui tend à maintenir la vanne d'ouverture en position fermée contre la bouche 51 lorsque aucun effort extérieur n'est exercé sur le levier de manoeuvre 53.

Afin de faciliter la manipulation du levier de manoeuvre 53 sans risquer de déstabiliser l'appareil ménager, le récipient comprend une languette fixe 55 située en regard du levier de manoeuvre 53 qui est alors conçu pour être mobile entre une position éloignée de la languette fixe, représentée figure 2, dans laquelle la vanne d'ouverture 52 est fermée, et une position rapprochée de la languette fixe dans laquelle la vanne d'ouverture 52 est ouverte. Selon l'exemple illustré, le levier de manoeuvre 53 est mobile autour d'un axe sensiblement horizontal de sorte qu'il se déplace dans un plan sensiblement vertical. Par ailleurs, la languette fixe 55 est aménagée en partie basse d'une poignée de préhension 56 du récipient qui se trouve au-dessus du levier de manoeuvre 53.

Ainsi, lorsqu'un utilisateur souhaite soutirer la préparation alimentaire contenue dans le récipient 2, il pince à deux doigts le levier de manoeuvre 53 et la languette fixe 55 de manière à rapprocher le levier de manoeuvre 53 de cette dernière ce qui entraîne une ouverture de la bouche 51 et donc un écoulement du liquide contenu dans le récipient 2. Ce mode d'actionnement du levier mobile permet d'assurer un équilibrage des efforts exercés par l'utilisateur sur le récipient 2 de sorte que l'action sur le levier de manoeuvre ne peut induire un basculement du récipient. De plus, ce mode d'actionnement du levier de manoeuvre permet de le réaliser facilement alors que le récipient 2 est retiré du châssis 1 en étant tenu par la poignée 56.

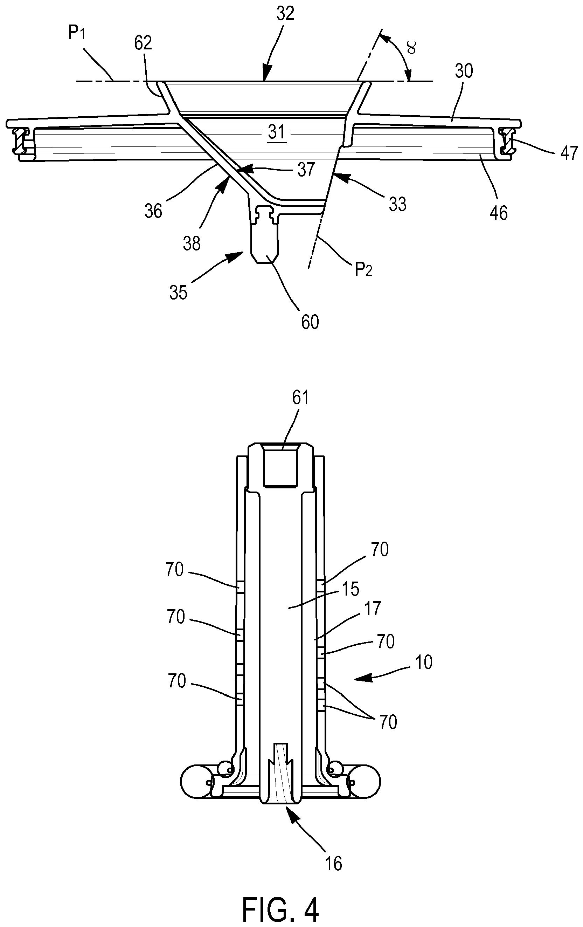

Selon l'exemple de réalisation décrit précédemment en relation avec la figure 2 notamment, les moyens de guidage en rotation 35 portés par la trémie 31 sont formés par l'alésage 40 de réception du doigt de guidage 41 porté par l'outil rotatif 10. Toutefois, un tel mode de réalisation des moyens de guidage 35 n'est pas strictement nécessaire ; ainsi la figure 4 montre un autre exemple de réalisation selon lequel les moyens de guidage 35 comprennent un pion 60 qui est porté par la paroi de fond 36 de la trémie 31 et qui est destiné à venir s'insérer dans un alésage complémentaire 61 de l'outil rotatif 10.

De plus, selon cet exemple de réalisation, la jupe creuse comprend des moyens d'évacuation de la préparation alimentaire qui sont constitués par au moins un et selon l'exemple illustré, par plusieurs canaux radiaux 70 traversant la jupe 17 et disposés de manière à être situés sous l'extrémité supérieure de la cheminée lorsque l'outil rotatif est en fonctionnement.

Par ailleurs selon cet exemple, l'ouverture d'introduction 32 est délimitée par une collerette périphérique 62 qui s'étend en saillie de la face supérieure du couvercle 30 et qui forme des moyens de préhension de ce dernier. De plus la collerette périphérique 62 est centrée par rapport au couvercle 30 et présente une forme tronconique convergeant vers l'intérieur de ce dernier.

Bien entendu diverses autres modifications peuvent être apportées à l'appareil ménager selon l'invention dans le cadre des revendications annexées.

## Revendications

1. - Appareil ménager pour émulsionner ou mélanger une préparation alimentaire fluide comprenant :
un récipient (2) muni d'un fond (3) et qui comprend, à proximité du fond (3) du récipient (2), une cheminée (13) qui s'étend vers le haut à partir du fond (3) jusqu'à une extrémité supérieure (14),
un châssis (1) supportant le récipient (2) et comprenant un moteur électrique (12) associé à des moyens d'entrainement (11) en rotation,
un outil (10), pour émulsionner ou mélanger la préparation alimentaire qui est rotatif autour d'un axe Δ incliné d'un angle α par rapport à la verticale, qui comprend un organe d'accouplement (15) avec les moyens d'entrainement (11) et une jupe creuse (17) d'axe Δ s'étendant à partir de l'organe d'accouplement (15) vers le bas et portant à l'opposé de l'organe d'accouplement (15) au moins un organe de travail (18),
**caractérisé en ce que** la jupe creuse (17) comporte des moyens de blocage de la préparation alimentaire situés entre la jupe creuse (17) et la cheminée (13) pour empêcher ladite préparation alimentaire d'atteindre l'extrémité supérieure (14), la jupe creuse (17) d'axe Δ s'évasant vers le bas et les moyens de blocage étant constitués par une surface intérieure (20) de la jupe creuse (17) qui présente une forme tronconique dont les génératrices forment avec l'axe Δ un angle β supérieur ou égal à l'angle α et **en ce que** la cheminée (13) comporte une paroi externe et la jupe creuse (17) présente une paroi interne, ladite paroi externe de la cheminée (13) étant non parallèle à la paroi interne de la jupe creuse (17).

2. - Appareil ménager selon la revendication 1, **caractérisé en ce que** la jupe creuse (17) comprend au moins un canal radial (21) traversant.

3. - Appareil ménager selon l'une des revendications précédentes, **caractérisé en ce que** :
l'organe d'accouplement comprend un arbre d'entrainement (15) dont une extrémité est solidaire de la jupe creuse (17) et dont l'extrémité opposée comprend une conformation d'accouplement (16) destinée à coopérer avec les moyens d'entrainement (11),
la cheminée (13) est destinée à recevoir l'arbre d'entrainement (15).

4. - Appareil ménager selon l'une des revendications précédentes, **caractérisé en ce que** le fond (3) du récipient (2) est sensiblement normal à l'axe Δ.

5. - Appareil ménager selon l'une des revendications précédentes, **caractérisé en ce que** le fond (3) du récipient (2) est incliné lorsque le châssis (1) de l'appareil repose sur une surface sensiblement horizontale.

6. - Appareil ménager selon l'une des revendications précédentes, **caractérisé en ce que** l'organe de travail (18) est un enroulement hélicoïdal à spires non jointives qui s'étend à la périphérie de la base de la jupe creuse (17).

7. - Appareil ménager selon l'une des revendications précédentes **caractérisé en ce que** le récipient (2) est amovible.

8. - Appareil ménager selon l'une des revendications précédentes, **caractérisé en ce qu'**il comprend des moyens de chauffage (4) du récipient (2).

9. - Appareil ménager selon la revendication précédente, **caractérisé en ce que** les moyens de chauffage (4) comprennent une résistance électrique (5) intégrée dans le fond (3) du récipient (2).

10. - Appareil ménager selon l'une des revendications précédentes, **caractérisé en ce que** la cheminée (13) est cylindrique de révolution d'axe Δ en étant ouverte au niveau de son extrémité supérieure (14)

11. - Appareil ménager selon l'une des revendications précédentes, **caractérisé en ce que** le récipient (2) comprend un robinet de distribution R situé à proximité de son fond (3) permettant un soutirage du contenu du récipient (2).

## Patentansprüche

1. Haushaltsgerät zum Emulgieren oder Mischen einer flüssigen Nahrungsmittelzubereitung, umfassend:
einen Behälter (2), der mit einem Boden (3) ausgestattet ist und der in der Nähe des Bodens (3) des Behälters (2) einen Schacht (13) umfasst, der sich ausgehend von dem Boden (3) bis zu einem oberen Ende (14) nach oben erstreckt,
ein Gestell (1), das den Behälter (2) trägt und einen Elektromotor (12) umfasst, der zu Drehantriebsmitteln (11) zugehörig ist,
ein Werkzeug (10) zum Emulgieren oder Mischen der Nahrungsmittelzubereitung, das um eine Achse Δ drehbar ist, die in einem Winkel α in Bezug auf die Vertikale geneigt ist, und das ein Element zur Verkopplung (15) mit den Antriebsmitteln (11) und eine hohle Schürze (17) mit einer Achse Δ umfasst, die sich ausgehend von dem Verkopplungselement (15) nach unten erstreckt und gegenüber von dem Verkopplungselement (15) mindestens ein Arbeitselement (18) trägt,
**dadurch gekennzeichnet, dass** die hohle Schürze (17) Sperrmittel für die Nahrungsmittelzubereitung umfasst, die sich zwischen der hohlen Schürze (17) und dem Schacht (13) befinden, um zu verhindern, dass die Nahrungsmittelzubereitung das obere Ende (14) erreicht, wobei sich die hohle Schürze (17) mit der Achse Δ nach unten aufweitet und die Sperrmittel von einer Innenfläche (20) der hohlen Schürze (17) gebildet werden, die eine kegelstumpfförmige Form aufweist, deren Mantellinien mit der Achse Δ einen Winkel β bilden, der größer oder gleich dem Winkel α ist, und dadurch, dass der Schacht (13) eine Außenwand umfasst und die hohle Schürze (17) eine Innenwand aufweist, wobei die Außenwand des Schachts (13) zur Innenwand der hohlen Schürze (17) nicht parallel ist.

2. Haushaltsgerät nach Anspruch 1, **dadurch gekennzeichnet, dass** die hohle Schürze (17) mindestens einen sie durchsetzenden, radialen Kanal (21) umfasst.

3. Haushaltsgerät nach einem der vorstehenden Ansprüche, **dadurch gekennzeichnet, dass**:
das Verkopplungselement eine Antriebswelle (15) umfasst, von der ein Ende mit der hohlen Schürze (17) fest verbunden ist und deren gegenüber liegendes Ende eine Verkopplungsausführung (16) umfasst, die dazu bestimmt ist, mit den Antriebsmitteln (11) zusammenzuwirken,
der Schacht (13) dazu bestimmt ist, die Antriebswelle (15) aufzunehmen.

4. Haushaltsgerät nach einem der vorstehenden Ansprüche, **dadurch gekennzeichnet, dass** der Boden (3) des Behälters (2) im Wesentlichen normal zu der Achse Δ verläuft.

5. Haushaltsgerät nach einem der vorstehenden Ansprüche, **dadurch gekennzeichnet, dass** der Boden (3) des Behälters (2) geneigt ist, wenn das Gestell (1) des Geräts auf einer im Wesentlichen horizontalen Oberfläche aufliegt.

6. Haushaltsgerät nach einem der vorstehenden Ansprüche, **dadurch gekennzeichnet, dass** das Arbeitselement (18) eine spiralförmige Wicklung mit einander nicht berührenden Windungen ist, das sich am Umfang der Basis der hohlen Schürze (17) erstreckt.

7. Haushaltsgerät nach einem der vorstehenden Ansprüche, **dadurch gekennzeichnet, dass** der Behälter (2) abnehmbar ist.

8. Haushaltsgerät nach einem der vorstehenden Ansprüche, **dadurch gekennzeichnet, dass** es Heizmittel (4) für den Behälter (2) umfasst.

9. Haushaltsgerät nach dem vorstehenden Anspruch, **dadurch gekennzeichnet, dass** die Heizmittel (4) einen elektrischen Widerstand (5) umfassen, der in den Boden (3) des Behälters (2) eingebaut ist.

10. Haushaltsgerät nach einem der vorstehenden Ansprüche, **dadurch gekennzeichnet, dass** der Schacht (13) rotationszylindrisch um die Achse Δ ist, wobei er auf Höhe seines oberen Endes (14) offen ist.

11. Haushaltsgerät nach einem der vorstehenden Ansprüche, **dadurch gekennzeichnet, dass** der Behälter (2) einen Abgabehahn R umfasst, der sich in der Nähe seines Bodens (3) befindet und eine Entnahme des Inhalts des Behälters (2) ermöglicht.

## Claims

1. Kitchen appliance for emulsifying or mixing a fluid food preparation, comprising:
- a recipient (2) provided with a bottom (3) and which comprises, near to the bottom (3) of the recipient (2), a shaft (13) that extends upwards from the bottom (3) as far as an upper end (14),
- an understructure (1) supporting the recipient (2) and comprising an electric motor (12) associated with rotational drive means (11),
- a tool (10) for emulsifying or mixing the food preparation that can rotate about an axis Δ inclined at an angle α relative to the vertical, which comprises a coupling member (15) for coupling with the drive means (11) and a hollow skirt (17) having an axis Δ that extends from the coupling member (15) downwards and bearing, opposite the coupling member (15), at least one working member (18),
**characterised in that** the hollow skirt (17) comprises means for blocking the food preparation situated between the hollow skirt (17) and the shaft (13) in order to prevent said food preparation from reaching the upper end (14), the hollow skirt (17) having an axis Δ that is flared in the downwards direction and the blocking means being constituted from an inner surface (20) of the hollow skirt (17) that has a frustoconical shape, the generatrices of which form with the axis Δ an angle β that is greater than or equal to the angle α and **in that** the shaft (13) comprises an outer wall and the hollow skirt (17) has an inner wall, said outer wall of the shaft (13) not being parallel to the inner wall of the hollow skirt (17).

2. Kitchen appliance according to claim 1, **characterised in that** the hollow skirt (17) comprises at least one radial through-channel (21).

3. Kitchen appliance according to one of the previous claims, **characterised in that**:
- the coupling member comprises a drive shaft (15), one end of which is secured to the hollow skirt (17) and the opposite end of which comprises a coupling conformation (16) intended to engage with the drive means (11),
- the shaft (13) is intended to receive the drive shaft (15).

4. Kitchen appliance according to one of the previous claims, **characterised in that** the bottom (3) of the recipient (2) is substantially normal to the axis Δ.

5. Kitchen appliance according to one of the previous claims, **characterised in that** the bottom (3) of the recipient (2) is inclined when the understructure (1) of the appliance is at rest on a substantially horizontal surface.

6. Kitchen appliance according to one of the previous claims, **characterised in that** the working member (18) is a helical winding with open coils that extends at the periphery of the base of the hollow skirt (17).

7. Kitchen appliance according to one of the previous claims, **characterised in that** the recipient (2) is removable.

8. Kitchen appliance according to one of the previous claims, **characterised in that** it comprises heating means (4) for heating the recipient (2).

9. Kitchen appliance according to the previous claim, **characterised in that** the heating means (4) comprise an electrical resistor (5) built into the bottom (3) of the recipient (2).

10. Kitchen appliance according to one of the previous claims, **characterised in that** the shaft (13) is cylindrical and has an axis of revolution Δ while being open at the upper end (14) thereof.

11. Kitchen appliance according to one of the previous claims, **characterised in that** the recipient (2) comprises a distribution tap R situated near the bottom (3) thereof, allowing the contents of the recipient (2) to be extracted.
